# FASCICULE DE BREVET EUROPEEN

(11) **EP 2 782 748 B1**
(45) Date de publication et mention de la délivrance du brevet: **27.04.2016**
(21) Numéro de dépôt: 12794920.4
(22) Date de dépôt: 23.11.2012
(51) Int. Cl.: B29D 30/06

(54) **ÉLÉMENT MOULANT ET MOULE DE VULCANISATION D'UNE BANDE DE ROULEMENT DE PNEUMATIQUE**
FORMTEIL UND VULKANISIERFORM ZUM FORMEN UND VULKANISIEREN EINER REIFENLAUFFLÄCHE
MOULDING ELEMENT AND VULCANIZING MOULD FOR A TIRE TREAD

(30) Priorité: 25.11.2011 FR 1160778
(43) Date de publication de la demande: 01.10.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: VILLENEUVE, Bernard, 63040 Clermont-Ferrand cedex 9 (FR); ROTY, Gaël, Tokyo 102-8176 (JP); GREVERIE, Ludovic, Tokyo 102-8176 (JP)
(74) Mandataire: Demaure, Pierre-Yves
(86) Numéro de dépôt international: PCT/EP2012/073435
(87) Numéro de publication internationale: WO 2013/076233

(56) Documents cités:
- WO-A1-2010/146180
- FR-A1- 2 715 891
- JP-A- 5 131 813
- US-A- 5 800 642
- US-A- 6 119 744

## Description

### DOMAINE DE L'INVENTION

La présente invention concerne le domaine de la fabrication d'un moule pour pneumatique comportant une pluralité de cavités aptes à mouler des dispositifs de fermeture dans une ou plusieurs rainure(s) de ce pneumatique. Plus particulièrement, l'invention concerne la fabrication d'un moule formé à partir d'une pluralité d'éléments moulants.

### ETAT DE LA TECHNIQUE

Il est connu du document WO 2010146180 un moule de vulcanisation pour pneumatique comprenant une pluralité d'éléments moulants. Chaque élément moulant est délimité par deux bords de contact avec deux autres éléments moulants adjacents de sorte qu'une fois les éléments moulants au contact les uns contre les autres, l'ensemble de ces éléments moulants permet le moulage de tout ou partie de la bande de roulement du pneumatique.

Chaque élément moulant comprend une embase ainsi qu'un cordon faisant saillie à partir de cette embase. L'embase est destinée à mouler la surface de roulement de la bande de roulement du pneumatique et le cordon est destiné à mouler une rainure dans la bande de roulement de ce pneumatique, c'est-à-dire une découpure dont la largeur est supérieure ou égale à 2 mm.

Il est connu que dans la zone de contact de la bande de roulement avec la chaussée, chaque rainure forme avec cette chaussée un tuyau de résonance. Ce tuyau de résonance amplifie les bruits de roulage du pneumatique, ce qui peut être désagréable pour des personnes situées à l'intérieur du véhicule et/ou à l'extérieur de ce véhicule.

Afin de limiter l'intensité de ces bruits de résonance, il est connu de pourvoir les rainures avec des dispositifs de fermeture particuliers, également appelés « parois flexibles », « flaps » ou « clapets ». Ces dispositifs de fermeture se présentent sous la forme de lames de faible épaisseur. Ces lames ferment partiellement la section transversale des rainures lorsque le pneumatique roule sur une chaussée sèche. Dans le cas d'un roulage sur une chaussée humide, les lames fléchissent sous l'action du flux de l'eau, de sorte que l'évacuation de cette eau hors de la zone de contact du pneumatique avec la chaussée est possible. L'adhérence du pneumatique sur la chaussée est alors maintenue même lors d'un roulage dans des conditions sévères d'humidité.

Il existe différents types de dispositifs de fermeture d'une rainure. Par exemple, le document WO 2010063749 divulgue des dispositifs de fermeture fixés par leur base à un fond d'une rainure. Il a été constaté que la flexibilité de ces dispositifs évolue dans le temps. Ainsi avec l'usure du pneumatique, la hauteur de ces dispositifs de fermeture diminue, entraînant alors une augmentation de leur rigidité. Ces dispositifs de fermeture peuvent donc à terme empêcher une bonne circulation du flux d'eau dans la rainure.

Pour améliorer le fonctionnement des dispositifs de fermeture sur une chaussée humide, il a été proposé dans le document FR2715891, de fermer la section de la rainure avec deux dispositifs de fermeture appartenant à un même plan transversal et couvrant chacun environ la moitié de la section transversale de cette rainure. Ces dispositifs de fermeture sont fixés respectivement sur des parois latérales de la rainure et pas au fond de cette rainure. Ainsi, avec l'usure de la bande de roulement, la zone d'accroche de chaque dispositif de fermeture avec la paroi associée de la rainure diminue. La flexibilité du dispositif de fermeture est maintenue au cours du temps, voire augmentée, jusqu'à un certain degré d'usure de la bande de roulement.

Cependant pour mouler ces dispositifs de fermeture dans une rainure, il est nécessaire de réaliser des fentes dans les faces latérales d'un cordon d'un moule, ces fentes ne devant pas déboucher sur la surface supérieure de ce cordon. Or la réalisation de ces fentes, avec le degré de précision requis, s'accompagne d'un grand nombre de difficultés.

L'invention a donc pour but de faciliter la fabrication d'un moule permettant de mouler dans une bande de roulement d'un pneumatique des dispositifs de fermeture accrochés à des parois latérales d'une rainure.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « moule », on entend un ensemble d'éléments moulants séparés qui, par rapprochement relatif, permettent de délimiter un espace de moulage toroïdal.

Par «élément moulant», on entend une partie d'un moule. Un élément moulant est par exemple un segment de moule.

Par « embase », on entend la partie de l'élément moulant comportant une surface de moulage apte à mouler la surface de roulement de la bande de roulement du pneumatique. L'embase comprend notamment des moyens de fixation destinés à fixer l'élément moulant au reste du moule.

Par « cordon », on entend une protubérance faisant saillie à partir de l'embase et dont la largeur est supérieure ou égale à 2 mm. Le cordon est destiné à mouler une rainure dans la bande de roulement du pneumatique.

Par « cavité » dans un moule, on entend un volume de creux délimité par des parois du moule. Cette cavité est apte à mouler un dispositif de fermeture dans une rainure moulée par un cordon.

Par « renfoncement » dans un cordon (« recess » en anglais), on entend un creux dans le cordon débouchant sur un bord de contact de l'élément moulant. Ce renfoncement est apte à être fermé au niveau du bord de contact de cet élément moulant par un autre élément moulant en vue de former une cavité.

Par « bord de contact » d'un élément moulant, on entend une surface de l'élément moulant destinée à entrer en contact avec un autre élément moulant pour former tout ou partie d'un moule de vulcanisation.

### RESUME DE L'INVENTION

L'invention concerne un élément moulant comme défini dans la revendication 1, pour un moule de vulcanisation d'une bande de roulement d'un pneumatique. L'élément moulant comporte une embase apte à mouler une partie de la surface de roulement de la bande de roulement et un cordon apte à mouler une rainure dans la bande de roulement. Ce cordon comprend deux faces latérales s'étendant dans la longueur du cordon en faisant saillie à partir de l'embase et une face supérieure reliant les faces latérales. L'élément moulant comporte un bord de contact formé par l'embase et le cordon. Ce bord de contact est destiné à entrer en contact avec un autre élément moulant pour former tout ou partie du moule de vulcanisation. L'élément moulant comporte en outre au moins un renfoncement dans le cordon. Ce renfoncement débouche sur une des faces latérales du cordon et sur le bord de contact de l'élément moulant. Ce renfoncement ne débouche pas sur la face supérieure du cordon.

Le renfoncement formé dans l'élément moulant est apte à être fermé par un autre élément moulant du moule pour constituer une cavité de moulage d'un dispositif de fermeture. En outre, chaque renfoncement peut être formé par des moyens conventionnels tels qu'un usinage mécanique, un usinage par électroérosion ou un poinçonnage.

L'invention permet donc de former des cavités de moulage dans un moule et ceci d'une manière simple et pratique.

De plus, étant donné que le renfoncement de l'élément moulant débouche sur le bord de cet élément moulant, les parois de l'élément moulant délimitant ce renfoncement sont facilement accessibles, notamment avant l'assemblage de cet élément moulant dans le moule. Ainsi, il est possible de revêtir ces parois avec un revêtement anti-adhérent, tel que du xylane. Par l'utilisation de ce revêtement anti-adhérent, on améliore le démoulage des dispositifs de fermeture.

Dans une variante de réalisation, l'élément moulant comporte dans le cordon un premier renfoncement et un second renfoncement. Chaque renfoncement débouche respectivement sur une des faces latérales du cordon et sur le bord de contact de l'élément moulant. Aucun de ces renfoncements ne débouche sur la face supérieure du cordon.

L'élément moulant comporte ainsi deux renfoncements, chaque renfoncement débouchant respectivement sur une des faces latérales du cordon. On peut ainsi réaliser facilement une paire de dispositifs de fermeture accrochés respectivement à deux parois latérales opposées de la rainure moulée par le cordon, chaque dispositif étant alors adapté pour fermer une partie de la section transversale de cette rainure.

Dans une variante de réalisation, l'élément moulant comporte un troisième renfoncement disposé dans le cordon entre le premier renfoncement et le second renfoncement. Ce troisième renfoncement débouche sur la face supérieure du cordon et sur le bord de contact de l'élément moulant. Ce troisième renfoncement ne débouche pas sur des faces latérales du cordon.

L'invention permet donc de mouler facilement trois dispositifs de fermeture s'étendant dans un même plan transversale dans une rainure. Ceci est notamment intéressant, dans le cas où la section transversale de la rainure présente une largeur importante, par exemple une largeur supérieure à 15 mm. Avec une telle largeur de rainure, l'utilisation de seulement deux dispositifs de fermeture accrochés respectivement à deux parois latérales opposées de la rainure et présentant selon une direction transversale une dimension équivalente à environ la moitié de la largeur de cette rainure, peut poser des problèmes en terme de pérennité. En effet, les mouvements des dispositifs de fermeture engendrés par l'alternance des roulages sur une chaussée sèche et sur une chaussée humide peuvent générer des concentrations de contraintes au niveau de la base de chaque dispositif de fermeture. Il existe donc à terme un risque d'apparition de fissures au niveau de ces bases. En prévoyant un troisième dispositif de fermeture disposé entre le premier dispositif de fermeture et le second dispositif de fermeture, on diminue la dimension transversale de ce premier dispositif de fermeture et de ce second dispositif de fermeture. Les contraintes que supportent ces deux dispositifs de fermeture sont alors moins importantes et leur fonctionnement dans le temps est ainsi amélioré.

Dans une variante de réalisation, l'élément moulant comporte un canal d'évacuation d'air. Ce canal d'évacuation prolonge le renfoncement ou chaque renfoncement dans toute l'épaisseur de l'embase.

On assure ainsi une bonne évacuation de l'air emprisonné dans le ou les renfoncements lors de la vulcanisation du pneumatique.

Dans une variante de réalisation, l'élément moulant comporte des moyens de réglage des dimensions du canal d'évacuation de l'air.

On s'assure ainsi que l'air est bien évacué lors de la vulcanisation du pneumatique tout en empêchant un échappement de gomme par le canal d'évacuation. On évite ainsi qu'un surplus de gomme moulé par le canal d'évacuation ne vienne se former sur la partie supérieure du dispositif de fermeture. En effet, un tel surplus de gomme pourrait nuire au bon fonctionnement de ce dispositif de fermeture.

Dans une variante de réalisation, l'élément moulant comporte des moyens de réglage de la hauteur du renfoncement ou de chaque renfoncement dans le cordon.

Lors du refroidissement du pneumatique une fois celui-ci moulé, il se peut que le dispositif de fermeture se rétracte ce qui modifie sa hauteur dans la rainure du pneumatique. L'importance de ce phénomène de rétractation est difficilement quantifiable. En effet, ce phénomène dépend de nombreux facteurs tels que le volume de gomme formant le dispositif de fermeture, les conditions de température de la vulcanisation, la composition de gomme utilisée. Afin de donner un aspect uniforme au pneumatique, lorsque celui-ci est à l'état neuf, il est intéressant de faire venir affleurer la partie supérieure du dispositif de fermeture avec la surface de roulement de la bande de roulement. En prévoyant des moyens de réglage de la hauteur du renfoncement, il est possible d'obtenir, par des essais successifs, un dispositif de fermeture avec la hauteur adéquate pour garantir un aspect uniforme du pneumatique. Des formes préferentielles de l'élément moulant selon l'invention sont définies dans les revendications 2 à 9.

Un autre objet de l'invention concerne un moule pour la vulcanisation d'une bande de roulement d'un pneumatique comme défini dans la revendication 10, le moule comportant une pluralité d'éléments moulants. Ces éléments moulants sont en contact entre eux pour former une surface de moulage apte à mouler une surface de roulement de la bande de roulement du pneumatique. Ces éléments moulants forment également au moins un cordon apte à mouler une rainure dans la bande de roulement. Ce cordon comporte deux faces latérales s'étendant dans la longueur du cordon en faisant saillie à partir de la surface de moulage et une face supérieure reliant lesdites faces latérales. Le moule objet de l'invention est remarquable en ce qu'il comprend au moins une cavité apte à mouler un dispositif de fermeture destiné à fermer tout ou partie d'une section transversale de la rainure moulée par le cordon. Cette cavité débouche sur une des faces latérales du cordon et ne débouche pas sur la face supérieure de ce cordon de sorte que le dispositif de fermeture moulé par la cavité est venu de matière uniquement avec une paroi latérale de la rainure. La cavité est délimitée par des parois appartenant à deux éléments moulants en contact l'un contre l'autre et au moins un desdits éléments moulants est conforme à un élément moulant tel que décrit ci-dessus.

Il est ainsi possible de fabriquer d'une manière simple et pratique un moule apte à mouler des dispositifs de fermeture dans la bande de roulement d'un pneumatique.

Dans une variante de réalisation, le moule comprend au moins deux cavités décalées l'une de l'autre dans la longueur du cordon, chaque cavité débouchant respectivement sur une des faces latérales de ce cordon.

Il est ainsi possible de mouler dans la rainure deux dispositifs de fermeture décalés dans la longueur de cette rainure. On s'assure ainsi que les dispositifs de fermeture ne vont pas se gêner lors de leurs mouvements d'ouverture et de fermeture.

Dans une variante de réalisation, la largeur de la cavité est comprise entre 0,1 mm et 2 mm.

Il est ainsi possible de mouler des dispositifs de fermeture de faible épaisseur. Cette faible épaisseur des dispositifs de fermeture leur donne une bonne capacité pour fléchir lors d'un roulage sur une chaussée humide. Des formes préferentielles du moule selon l'invention sont définies dans les revendications 11 et 12.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle en perspective d'un élément moulant conformément à un premier mode de réalisation de l'invention ;
- la **figure 2** représente schématiquement une vue partielle en perspective d'un élément moulant conformément à un second mode de réalisation de l'invention ;
- la **figure 3** représente schématiquement une vue partielle en perspective d'un élément moulant conformément à un troisième mode de réalisation de l'invention ;
- la **figure 4** représente schématiquement une vue partielle en perspective d'un élément moulant conformément à un quatrième mode de réalisation de l'invention ;
- la **figure 5** représente schématiquement une vue partielle en perspective d'un élément moulant conformément à un cinquième mode de réalisation de l'invention ;
- la **figure 6** représente une vue en coupe de deux éléments moulants conformes au mode de réalisation de la **figure 1****,** ces deux éléments moulants étant assemblés pour former deux cavités de moulage, ces cavités de moulage étant décalées dans la longueur du cordon ;
- la **figure 7** représente schématiquement une vue partielle d'un élément moulant conformément à un sixième mode de réalisation de l'invention ;
- la **figure 8** représente schématiquement une vue partielle d'un élément moulant conformément à un septième mode de réalisation de l'invention ;
- la **figure 9** représente schématiquement une vue partielle d'un élément moulant conformément à un huitième mode de réalisation de l'invention.

Dans la description qui va suivre, des éléments sensiblement identiques ou similaires seront désignés par des références identiques.

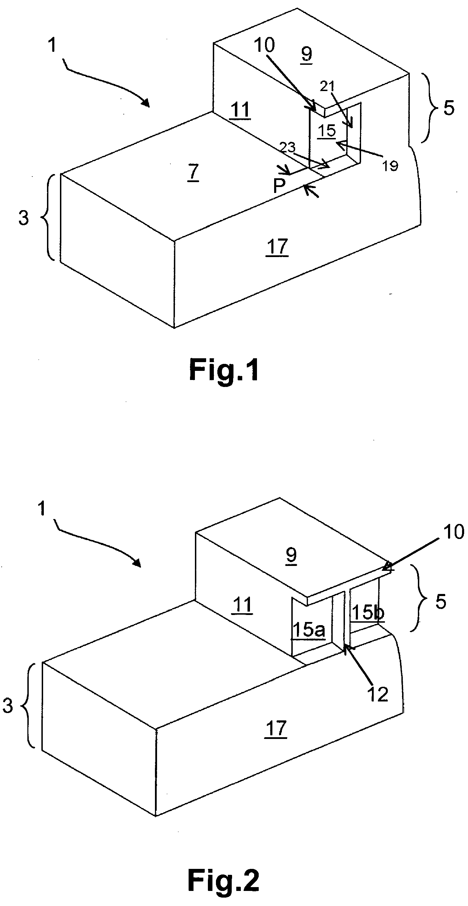

La **figure 1** représente schématiquement une vue en perspective d'un élément moulant 1 d'un moule conformément à un premier mode de réalisation de l'invention.

L'élément moulant 1 comprend une embase 3 et un cordon 5 faisant saillie à partir de ladite embase 3. L'embase 3 et le cordon 5 sont ici venus de matière et sont formés dans un matériau de type aluminium.

Plus particulièrement, l'embase 3 comprend une surface de moulage 7 destinée à mouler une partie de la surface de roulement d'un pneumatique. Le cordon 5 comprend quant à lui une face supérieure 9 destinée à mouler le fond d'une rainure et deux faces latérales 11, dont une seule est ici représentée. Ces faces latérales 11 font saillie à partir de la surface de moulage 7 de l'embase 3 et s'étendent dans la longueur du cordon.

Pour faciliter la compréhension de l'invention, le cordon 5 a été représenté ici comme formant globalement un parallélépipède rectangle. Bien entendu, l'invention n'est pas limitée à cette forme particulière du cordon. En variante, la face supérieure 9 du cordon peut être non plane, par exemple bombée, de sorte que le fond de la rainure moulée par le cordon 5 est incurvé. De la même manière, l'angle formé par les faces latérales 11 avec la surface de moulage 7 de l'embase 3 peut être différent de 90°. Par exemple, chaque face latérale 11 peut former un angle supérieur à 0° et inférieur ou égale à 45° avec une direction normale à la surface de moulage 7. En outre, les faces latérales 11 peuvent comprendre des parties de raccordement avec la face supérieure 9. Ces parties de raccordement sont par exemple curvilignes de sorte qu'il est possible d'éviter la présence d'angles droits entre le fond de la rainure moulé par la face supérieure du cordon et les parois longitudinales de cette rainure. Ceci permet de limiter les risques d'apparition de fissures dans la rainure.

On peut noter sur la **figure 1** que le cordon 5 comprend un renfoncement 15. Ce renfoncement est destiné à recevoir de la gomme crue pour le moulage d'un dispositif de fermeture dans une rainure d'un pneumatique. Le renfoncement 15 débouche ici sur une des faces latérales 11 du cordon 5 et sur un bord de contact 17 de l'élément moulant 1. En revanche, le renfoncement 15 ne débouche pas sur la face supérieure 9 du cordon 5.

De manière plus détaillée, le renfoncement 15 est délimité par une paroi transversale 19, par une paroi longitudinale 21, par une paroi inférieure 23 et par une paroi supérieure (non visible sur la **figure 1**) appartenant à une avancée 10 prolongeant la face supérieure 9 du cordon. La paroi transversale 19 est ici perpendiculaire à la paroi longitudinale 21. En variante, il est possible que la paroi transversale 19 forme un angle différent de 90° avec la paroi longitudinale 21.

On notera également que la profondeur P du renfoncement 15, c'est-à-dire la dimension de ce renfoncement dans la longueur du cordon, est ici constante et est comprise entre 0,1 mm et 1 mm. En variante, la profondeur du renfoncement 15 peut varier dans la hauteur du renfoncement 15. Ceci est notamment possible lorsque la paroi transversale 19 forme un angle différent de 0° avec une direction normale à la paroi inférieure 23.

La **figure 2** présente une variante de réalisation de l'élément moulant 1 comportant deux renfoncements 15a, 15b. Chacun de ces renfoncements débouche respectivement sur une des faces latérales 11 du cordon 5 et sur le bord de contact 17 de l'élément moulant. Aucun de ces renfoncements 15a, 15b ne débouche sur la face supérieure 9 du cordon 5. Chaque renfoncement 15a, 15b est délimité par une avancée 10 prolongeant la face supérieure 9 du cordon 5 et par une paroi de séparation 12 reliant l'embase 3 à l'avancée 10 et séparant les deux renfoncements 15a et 15b. Ainsi grâce à l'élément moulant de la **figure 2****,** il est possible de mouler deux dispositifs de fermeture dans une même rainure, chacun de ces dispositifs étant apte à obturer une partie de la section transversale de cette rainure. Les dimensions des deux renfoncements 15a, 15b sont ici identiques. En variante, les dimensions de ces deux renfoncements peuvent être différentes.

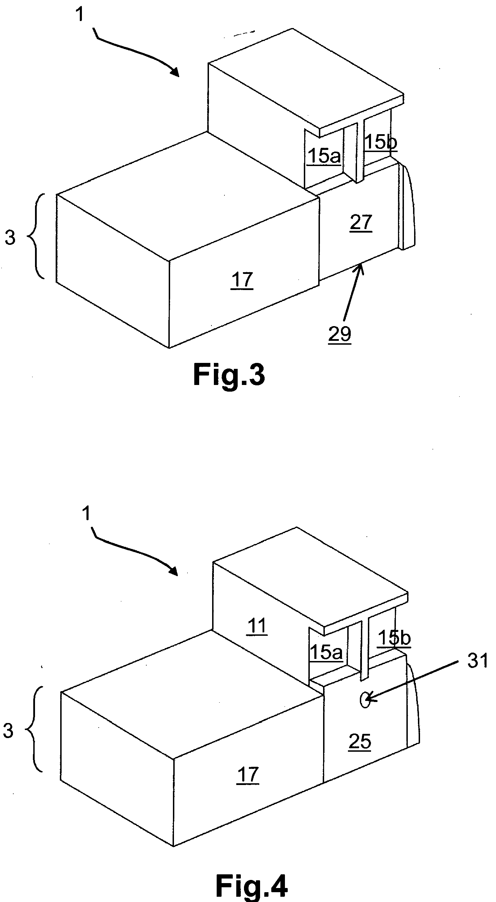

La **figure 3** présente une variante de réalisation, dans laquelle l'élément moulant 1 de la **figure 2** comprend en outre un canal d'évacuation d'air 27 prolongeant les renfoncements 15a et 15b dans toute l'épaisseur de l'embase 3. Ainsi, le canal d'évacuation 27 débouche sur une surface externe 29 de l'embase. Cette surface externe 29 est apte à être en contact avec l'air au cours de l'utilisation de l'élément moulant 1, et plus particulièrement lorsque le moule est fermé pendant l'étape de vulcanisation. On notera que la profondeur du canal d'évacuation 27, c'est-à-dire la dimension du canal dans la longueur du cordon, est de l'ordre de 0,03 mm. On notera également que ce canal 27 est ici représenté comme étant débouchant sur la surface de contact 17 de l'élément moulant. En variante, le canal d'évacuation 27 peut être non débouchant et délimité entièrement par l'embase 3.

Dans une variante de réalisation non représentée, l'élément moulant 1 peut comporter une cale d'obstruction s'étendant dans la longueur du canal d'évacuation 27. Cette cale permet ainsi de régler la section du canal d'évacuation afin d'éviter toute pénétration de gomme crue dans ce canal lors de l'opération de vulcanisation tout en permettant une évacuation de l'air hors du moule. La cale d'obstruction peut présenter différentes épaisseurs en fonction de la composition de la gomme crue utilisée. On notera également que cette cale d'obstruction peut être formée dans le même matériau que l'élément moulant et elle est fixée à cet élément moulant par collage, vissage ou tout autre moyen.

La **figure 4** présente une variante de réalisation dans laquelle la paroi inférieure de chaque renfoncement 15a, 15b est formée par une cale de réglage 25. Cette cale de réglage 25 a une hauteur déterminée en fonction de la hauteur que l'on souhaite donner aux dispositifs de fermeture moulés par les renfoncements 15a, 15b. La cale de réglage 25 a une épaisseur correspondant à la profondeur des renfoncements 15a, 15b. En variante, la cale de réglage 25 a une épaisseur inférieure à la profondeur de ces renfoncements de sorte que cette cale de réglage présente une paroi en retrait par rapport au bord de contact 17 de l'élément moulant 1, formant ainsi un canal d'évacuation d'air.

La cale de réglage 25 présente ici un orifice 31 pour le passage d'un élément de fixation de cette cale avec le reste de l'élément moulant 1, tel qu'une vis de fixation. En variante, la cale de réglage 25 peut être fixée par collage ou par tout autre moyen.

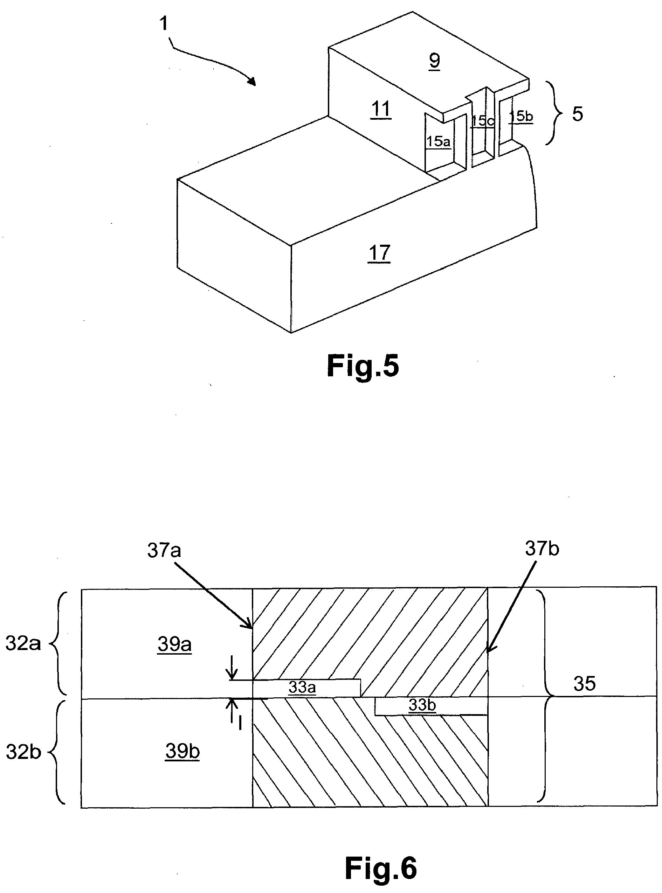

La **figure 5** présente une variante de réalisation de l'élément moulant 1 de la **figure 2****,** dans laquelle cet élément moulant comporte un troisième renfoncement 15c disposé dans le cordon entre le premier renfoncement 15a et le second renfoncement 15b. Ce troisième renfoncement débouche sur la face supérieure 9 du cordon 5 et sur le bord de contact 17 de l'élément moulant 1. Le troisième renfoncement ne débouche pas sur les faces latérales 11 du cordon 5. Ainsi le troisième renfoncement est apte à mouler un dispositif de fermeture accroché au fond d'une rainure moulée par le cordon 5, ce dispositif de fermeture étant disposé dans cette rainure entre deux dispositifs de fermeture accrochés respectivement aux parois latérales de la rainure.

Le premier renfoncement 15a, le second renfoncement 15b et le troisième renfoncement 15c peuvent avoir des profondeurs identiques, c'est-à-dire une même dimension mesurée dans la longueur du cordon. En variante les profondeurs de ces renfoncements 15a, 15b, 15c peuvent être différentes.

La **figure 6** présente un assemblage de deux éléments moulants 32a, 32b conformes au mode de réalisation de la **figure 1****.** Plus particulièrement, la **figure 6** est une vue en coupe de cet assemblage dans un plan sensiblement parallèle aux surfaces de moulage 39a, 39b des éléments moulants 32a, 32b.

L'assemblage des deux éléments moulants 32a, 32b forme deux cavités 33a, 33b décalées l'une de l'autre dans la longueur du cordon 35. Chaque cavité 33a, 33b débouchant respectivement sur une des faces latérales 37a, 37b de ce cordon 35. Plus particulièrement, chaque cavité 33a, 33b est formée par un renfoncement appartenant à un des deux éléments moulants 32a, 32b, ce renfoncement étant délimité par un bord de contact appartenant à l'autre élément moulant 32a, 32b.

Dans une variante de réalisation non représentée, l'assemblage de deux éléments moulants 32a, 32b forme une seule cavité, cette cavité étant constituée par deux renfoncements en vis-à-vis appartenant respectivement aux deux éléments moulants.

On notera que les largeurs 1 des cavités 33a, 33b sont comprises entre 0,1 mm et 2 mm.

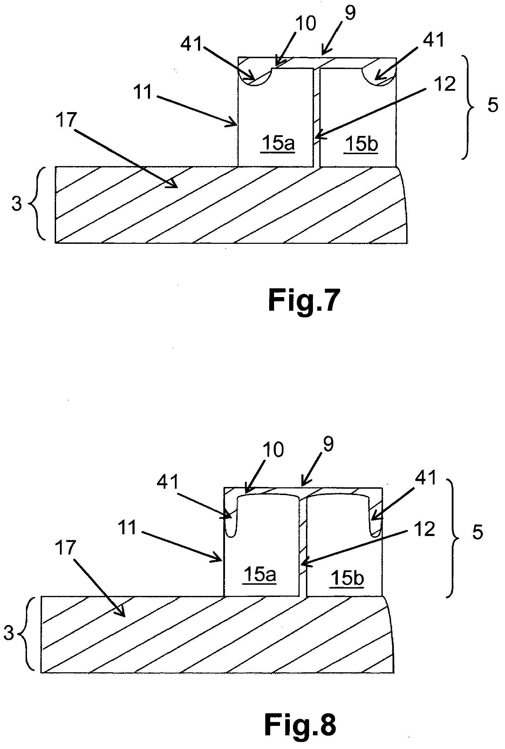

La **figure 7** présente une variante de réalisation de l'élément moulant de la **figure 2** dans laquelle cet élément moulant comporte deux protubérances 41 faisant saillie à partir de l'avancée 10. Ces protubérances 41 sont respectivement disposées dans des coins supérieurs des renfoncements 15a, 15b à l'opposé de la paroi de séparation 12 et elles prolongent respectivement les faces latérales 11 du cordon 5. Les protubérances 41 sont destinées à mouler des encoches dans les dispositifs de fermeture moulés par l'élément moulant. La présence de ces encoches facilite le démoulage des dispositifs de fermeture tout en augmentant la flexibilité de ces dispositifs.

Les protubérances 41 de la **figure 7** ont une forme semi-circulaire. En variante, la **figure 8** présente des protubérances 41 ayant une forme oblongue dirigée vers l'embase 3. Les dispositifs de fermeture moulés par l'élément de la **figure 8** ont ainsi une zone d'accroche plus limitée avec les parois latérales respectives de la rainure. On peut ainsi assurer une désolidarisation plus rapide de ces dispositifs de fermeture de la bande de roulement, notamment lorsque l'usure de cette bande de roulement approche un niveau d'usure limite.

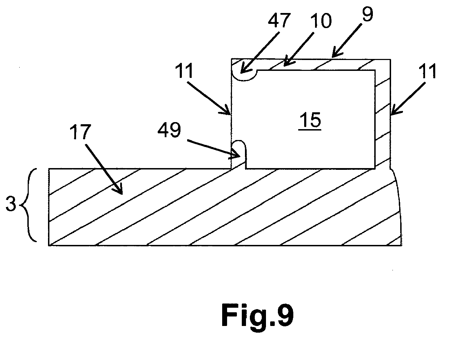

La **figure 9** présente une variante de réalisation de l'élément moulant de la **figure 1** dans laquelle l'élément moulant comporte deux protubérances 47, 49 en vis-à-vis, faisant saillie respectivement à partir de l'embase 3 et de l'avancée 10. Ces protubérances 47, 49 prolongent partiellement la face latérale 11 sur laquelle débouche le renfoncement 15. Le dispositif de fermeture moulé par l'élément de la **figure 9** présente ainsi une plus grande souplesse de flexion autour d'un axe parallèle à la paroi latérale de la rainure sur laquelle le dispositif de fermeture est accroché, cet axe parallèle s'étendant dans la hauteur de la rainure.

La forme des protubérances 47, 49 peut être semi-circulaire ou oblongue. En variante, les protubérances peuvent avoir des formes différentes, comme cela est représenté à la **figure 9****.** Toutes les combinaisons de forme sont possibles.

En outre, dans le mode de réalisation de la **figure 9****,** le renfoncement 15 s'étend sur une grande partie de la largeur du cordon 5, la largeur de ce cordon correspondant à la distance séparant les deux faces latérales 11. En variante, le renfoncement 15 peut s'étendre sur une distance bien inférieure à la largeur du cordon 5, tel que sur la moitié de la largeur de ce cordon.

L'invention n'est pas limitée aux exemples décrits et représentés et diverses modifications peuvent y être apportées sans sortir de son cadre.

## Revendications

1. Elément moulant pour un moule de vulcanisation d'une bande de roulement d'un pneumatique, ledit élément moulant (1) comportant une embase (3) apte à mouler une partie de la surface de roulement de la bande de roulement et un cordon (5) apte à mouler une rainure dans la bande de roulement, ledit cordon comprenant deux faces latérales (11) s'étendant dans la longueur du cordon en faisant saillie à partir de ladite embase et une face supérieure (9) reliant lesdites faces latérales, ledit élément moulant comportant un bord de contact (17) formé par l'embase et le cordon, ledit bord de contact étant destiné à entrer en contact avec un autre élément moulant pour former tout ou partie du moule de vulcanisation, **caractérisé en ce que** ledit élément moulant comporte au moins un renfoncement (15) dans le cordon, ledit renfoncement débouchant sur une des faces latérales du cordon (11) et sur le bord de contact (17) de l'élément moulant, ledit renfoncement ne débouchant pas sur la face supérieure (9) de ce cordon.

2. Elément moulant selon la revendication 1, **caractérisé en ce que** ledit élément moulant comporte dans le cordon un premier renfoncement (15a) et un second renfoncement (15b), chacun de ces renfoncements débouchant respectivement sur une des faces latérales (11) du cordon et sur le bord de contact (17) de l'élément moulant, aucun de ces renfoncements ne débouchant sur la face supérieure (9) de ce cordon.

3. Elément moulant selon la revendication 2, **caractérisé en ce que** ledit élément moulant comporte un troisième renfoncement (15c) disposé dans le cordon entre le premier renfoncement (15a) et le second renfoncement (15b), ledit troisième renfoncement débouchant sur la face supérieure (9) du cordon et sur le bord de contact (17) de l'élément moulant, ledit troisième renfoncement ne débouchant pas sur des faces latérales (11) du cordon.

4. Elément moulant selon l'une quelconque des revendications 1 à 3, **caractérisé en ce que** ledit élément moulant comporte un canal d'évacuation d'air (27), ledit canal d'évacuation prolongeant le renfoncement ou chaque renfoncement dans toute l'épaisseur de l'embase (3).

5. Elément moulant selon la revendication 4, **caractérisé en ce que** ledit élément moulant comporte des moyens de réglage des dimensions du canal d'évacuation d'air.

6. Elément moulant selon l'une quelconque des revendications 1 à 5, **caractérisé en ce que** ledit élément moulant comporte des moyens de réglage (25) de la hauteur du renfoncement ou de chaque renfoncement dans le cordon.

7. Elément moulant selon la revendication 2, **caractérisé en ce que** les renfoncements (15a, 15b) sont délimités par une avancée (10) prolongeant la face supérieure (9) du cordon (5) et une paroi de séparation (12) des renfoncements (15a, 15b) reliant l'embase (3) à l'avancée (10), ledit élément moulant comportant deux protubérances (41) faisant saillie à partir de cette avancée (10) disposées respectivement de part et d'autre de la paroi de séparation (12), ces protubérances (41) prolongeant respectivement les faces latérales (11) du cordon.

8. Elément moulant selon la revendication 7, **caractérisé en ce que** les protubérances (41) ont une forme oblongue dirigée vers l'embase (3).

9. Elément moulant selon la revendication 1, **caractérisé en ce que** le renfoncement (15) est délimité par une avancée (10) prolongeant la face supérieure (9) du cordon (5), ledit élément moulant comportant deux protubérances (47, 49) en vis-à-vis, faisant saillie respectivement à partir de l'embase (3) et de l'avancée (10), ces protubérances prolongeant une des faces latérales (11) du cordon.

10. Moule pour la vulcanisation d'une bande de roulement d'un pneumatique comportant une pluralité d'éléments moulants (32a, 32b), lesdits éléments moulants étant en contact entre eux pour former une surface de moulage apte à mouler une surface de roulement de la bande de roulement du pneumatique et au moins un cordon (35) apte à mouler une rainure dans la bande de roulement, ledit cordon comportant deux faces latérales (37a, 37b) s'étendant dans la longueur du cordon en faisant saillie à partir de la surface de moulage et une face supérieure reliant lesdites faces latérales, **caractérisé en ce que** ledit moule comprend au moins une cavité (33a, 33b) apte à mouler un dispositif de fermeture destiné à fermer tout ou partie d'une section transversale de la rainure moulée par le cordon, ladite cavité débouchant sur une des faces latérales (37a, 37b) du cordon et ne débouchant pas sur la face supérieure dudit cordon de sorte que le dispositif de fermeture moulé par la cavité est venu de matière uniquement avec une paroi latérale de la rainure et **en ce que** la cavité est délimitée par des parois appartenant à deux éléments moulants (32a, 32b) en contact l'un contre l'autre et au moins un desdits éléments moulants est conforme à l'une quelconque des revendications 1 à 9.

11. Moule de vulcanisation selon la revendication 10, **caractérisé en ce que** ledit moule comprend au moins deux cavités (33a, 33b) décalées l'une de l'autre dans la longueur du cordon, chaque cavité débouchant respectivement sur une des faces latérales (37a, 37b) de ce cordon.

12. Moule de vulcanisation selon l'une des revendications 10 ou 11, **caractérisé en ce que** la largeur (1) de la cavité (33a, 33b) est comprise entre 0,1 mm et 2 mm.

## Patentansprüche

1. Formgebungselement für ein Vulkanisierungs-Formwerkzeug eines Laufstreifens eines Luftreifens, wobei das Formgebungselement (1) ein Unterteil (3), das einen Teil der Lauffläche des Laufstreifens formen kann, und einen Wulst (5) aufweist, der eine Rille im Laufstreifen formen kann, wobei der Wulst zwei Seitenflächen (11), die sich in der Länge des Wulsts erstrecken, indem sie ausgehend vom Unterteil vorstehen, und eine Oberseite (9) enthält, die die Seitenflächen verbindet, wobei das Formgebungselement einen vom Unterteil und vom Wulst gebildeten Kontaktrand (17) aufweist, wobei der Kontaktrand dazu bestimmt ist, mit einem anderen Formgebungselement in Kontakt zu kommen, um das ganze oder einen Teil des Vulkanisierungs-Formwerkzeugs zu bilden, **dadurch gekennzeichnet, dass** das Formgebungselement mindestens einen Rücksprung (15) im Wulst aufweist, wobei der Rücksprung an einer der Seitenflächen des Wulsts (11) und am Kontaktrand (17) des Formgebungselements mündet, wobei der Rücksprung nicht an der Oberseite (9) dieses Wulsts mündet.

2. Formgebungselement nach Anspruch 1, **dadurch gekennzeichnet, dass** das Formgebungselement im Wulst einen ersten Rücksprung (15a) und einen zweiten Rücksprung (15b) aufweist, wobei jeder dieser Rücksprünge an einer der Seitenflächen (11) des Wulsts bzw. am Kontaktrand (17) des Formgebungselements mündet, wobei keiner dieser Rücksprünge an der Oberseite (9) dieses Wulsts mündet.

3. Formgebungselement nach Anspruch 2, **dadurch gekennzeichnet, dass** das Formgebungselement einen dritten Rücksprung (15c) aufweist, der im Wulst zwischen dem ersten Rücksprung (15a) und dem zweiten Rücksprung (15b) angeordnet ist, wobei der dritte Rücksprung an der Oberseite (9) des Wulsts und am Kontaktrand (17) des Formgebungselements mündet, wobei der dritte Rücksprung nicht an Seitenflächen (11) des Wulsts mündet.

4. Formgebungselement nach einem der Ansprüche 1 bis 3, **dadurch gekennzeichnet, dass** das Formgebungselement einen Entlüftungskanal (27) aufweist, wobei der Entlüftungskanal den Rücksprung oder jeden Rücksprung in der ganzen Dicke des Unterteils (3) verlängert.

5. Formgebungselement nach Anspruch 4, **dadurch gekennzeichnet, dass** das Formgebungselement Einstelleinrichtungen der Abmessungen des Entlüftungskanals aufweist.

6. Formgebungselement nach einem der Ansprüche 1 bis 5, **dadurch gekennzeichnet, dass** das Formgebungselement Einstelleinrichtungen (25) der Höhe des Rücksprungs oder jedes Rücksprungs im Wulst aufweist.

7. Formgebungselement nach Anspruch 2, **dadurch gekennzeichnet, dass** die Rücksprünge (15a, 15b) von einem Vorsprung (10), der die Oberseite (9) des Wulsts (5) verlängert, und einer Trennwand (12) der Rücksprünge (15a, 15b) begrenzt werden, die das Unterteil (3) mit dem Vorsprung (10) verbindet, wobei das Formgebungselement zwei Ausstülpungen (41), die ausgehend von diesem Vorsprung (10) vorstehen, zu beiden Seiten der Trennwand (12) angeordnet aufweist, wobei diese Ausstülpungen (41) die Seitenflächen (11) des Wulsts verlängern.

8. Formgebungselement nach Anspruch 7, **dadurch gekennzeichnet, dass** die Ausstülpungen (41) eine zum Unterteil (3) gerichtete längliche Form haben.

9. Formgebungselement nach Anspruch 1, **dadurch gekennzeichnet, dass** der Rücksprung (15) von einem Vorsprung (10) begrenzt wird, der die Oberseite (9) des Wulsts (5) verlängert, wobei das Formgebungselement zwei einander gegenüberliegende Ausstülpungen (47, 49) aufweist, die ausgehend vom Unterteil (3) bzw. vom Vorsprung (10) vorstehen, wobei diese Ausstülpungen eine der Seitenflächen (11) des Wulsts verlängern.

10. Formwerkzeug zur Vulkanisierung eines Laufstreifens eines Luftreifens, das eine Vielzahl von Formgebungselementen (32a, 32b), wobei die Formgebungselemente miteinander in Kontakt sind, um eine Formgebungsfläche zu bilden, die eine Lauffläche des Laufstreifens des Luftreifens formen kann, und mindestens einen Wulst (35) aufweist, der eine Rille im Laufstreifen formen kann, wobei der Wulst zwei Seitenflächen (37a, 37b), die sich in der Länge des Wulsts erstrecken, indem sie ausgehend von der Formgebungsfläche vorstehen, und eine die Seitenflächen verbindende Oberseite aufweist, **dadurch gekennzeichnet, dass** das Formwerkzeug mindestens einen Hohlraum (33a, 33b) enthält, der eine Schließvorrichtung formen kann, die dazu bestimmt ist, den ganzen oder einen Teil eines Querschnitts der vom Wulst geformten Rille zu verschließen, wobei der Hohlraum an einer der Seitenflächen (37a, 37b) des Wulsts mündet und nicht an der Oberseite des Wulsts mündet, so dass die vom Hohlraum geformte Schließvorrichtung nur mit einer Seitenwand der Rille aus einem Stück besteht, und dass der Hohlraum von Wänden begrenzt wird, die zu zwei miteinander in Kontakt stehenden Formgebungselementen (32a, 32b) gehören, und mindestens eines der Formgebungselemente einem der Ansprüche 1 bis 9 entspricht.

11. Vulkanisierungsformwerkzeug nach Anspruch 10, **dadurch gekennzeichnet, dass** das Formwerkzeug mindestens zwei Hohlräume (33a, 33b) enthält, die zueinander in der Länge des Wulsts versetzt sind, wobei jeder Hohlraum an einer der Seitenflächen (37a, 37b) dieses Wulsts mündet.

12. Vulkanisierungsformwerkzeug nach einem der Ansprüche 10 oder 11, **dadurch gekennzeichnet, dass** die Breite (1) des Hohlraums (33a, 33b) zwischen 0,1 mm und 2 mm liegt.

## Claims

1. Moulding element for a mould for vulcanizing a tyre tread, the said moulding element (1) comprising a base (3) able to mould part of the tread surface of the tread and a bar (5) able to mould a groove in the tread, the said bar comprising two lateral faces (11) extending along the length of the bar and protruding from the said base, and an upper face (9) connecting the said lateral faces, the said moulding element comprising a contact edge (17) formed by the base and the bar, the said contact edge being intended to come into contact with another moulding element to form all or part of the vulcanizing mould, **characterized in that** the said moulding element comprises at least one recess (15) in the bar, the said recess opening onto one of the lateral faces of the bar (11) and onto the contact edge (17) of the moulding element, the said recess not opening onto the upper face (9) of this bar.

2. Moulding element according to Claim 1, **characterized in that** the said moulding element comprises in the bar a first recess (15a) and a second recess (15b), each of these recesses opening respectively onto one of the lateral faces (11) of the bar and onto the contact edge (17) of the moulding element, none of these recesses opening onto the upper face (9) of this bar.

3. Moulding element according to Claim 2, **characterized in that** the said moulding element comprises a third recess (15c) arranged in the bar between the first recess (15a) and the second recess (15b), the said third recess opening onto the upper face (9) of the bar and onto the contact edge (17) of the moulding element, the said third recess not opening onto the lateral faces (11) of the bar.

4. Moulding element according to any one of Claims 1 to 3, **characterized in that** the said moulding element comprises an air discharge duct (27), the said discharge duct extending the recess or each recess throughout the thickness of the base (3).

5. Moulding element according to Claim 4, **characterized in that** the said moulding element comprises means of adjusting the dimensions of the air discharge duct.

6. Moulding element according to any one of Claims 1 to 5, **characterized in that** the said moulding element comprises adjusting means (25) for adjusting the height of the recess or of each recess in the bar.

7. Moulding element according to Claim 2, **characterized in that** the recesses (15a, 15b) are delimited by an overhang (10) extending the upper face (9) of the bar (5) and a dividing wall (12) separating the recesses (15a, 15b) and connecting the base (3) to the overhang (10), the said moulding element comprising two protuberances (41) projecting from this overhang (10) and arranged respectively one on each side of the dividing wall (12), these protuberances (41) respectively extending the lateral faces (11) of the bar.

8. Moulding element according to Claim 7, **characterized in that** the protuberances (41) have an oblong shape facing towards the base (3).

9. Moulding element according to Claim 1, **characterized in that** the recess (15) is delimited by an overhang (10) extending the upper face (9) of the bar (5), the said moulding element comprising two protuberances (47, 49) facing one another, projecting respectively from the base (3) and from the overhang (10), these protuberances extending one of the lateral faces (11) of the bar.

10. Mould for vulcanizing a tyre tread comprising a plurality of moulding elements (32a, 32b), the said moulding elements being in contact with one another to form a moulding surface capable of moulding a tread surface of the tread of the tyre and at least one bar (35) able to mould a groove in the tread, the said bar comprising two lateral faces (37a, 37b) extending along the length of the bar and projecting from the moulding surface, and an upper face connecting the said lateral faces, **characterized in that** the said mould comprises at least one cavity (33a, 33b) able to mould a closure device intended to close all or part of a cross section of the groove moulded by the bar, the said cavity opening onto one of the lateral faces (37a, 37b) of the bar and not opening onto the upper face of the said bar so that the closure device moulded by the cavity is formed as an integral part of only a lateral wall of the groove and **in that** the cavity is delimited by walls belonging to two moulding elements (32a, 32b) in contact with one another and at least one of the said moulding elements is in accordance with any one of Claims 1 to 9.

11. Vulcanizing mould according to Claim 10, **characterized in that** the said mould comprises at least two cavities (33a, 33b) that are offset from one another along the length of the bar, each cavity opening respectively onto one of the lateral faces (37a, 37b) of this bar.

12. Vulcanizing mould according to one of Claims 10 and 11, **characterized in that** the width (1) of the cavity (33a, 33b) is comprised between 0.1 mm and 2 mm.
